# EUROPEAN PATENT APPLICATION

(11) **EP 4 826 229 A1**
(43) Date of publication of application: **21.10.2026**
(21) Application number: 26172857.0
(22) Date of filing: 16.04.2026
(51) Int. Cl.: F02C 7/18, F02C 9/18, F02K 3/115

(54) **AIRCRAFT POWERPLANT AIR SYSTEM WITH REVERSE FLOW AIR CIRCUIT**

(30) Priority: 16.04.2025 US 202519180763
(71) Applicant: RTX Corporation, Farmington, CT 06032 (US)
(72) Inventor: CLARK, Thomas E., Wells, 04090 (US); YAZICI, Murat, Glastonbury, 06033 (US)
(74) Representative: Dehns

(57) **Abstract**

An aircraft powerplant system (22) includes a heat exchanger (172), a fluid circuit (158) and an air system (154). The fluid circuit (158) extends through the heat exchanger (172). The air system (154) includes a first circuit leg (176), a second circuit leg (178), a third circuit leg (180) and a flow regulator (166). The second circuit leg (178) is arranged with the heat exchanger (172). The flow regulator (166) is fluidly coupled between the first circuit leg (176), the second circuit leg (178) and the third circuit leg (180). The air system (154) is configured to receive air from an air source (160) and direct the air sequentially through the first circuit leg (176), the flow regulator (166) and the second circuit leg (178) during a first mode of operation. The air system (154) is configured to receive the air from the air source (160) and direct the air sequentially through the second circuit leg (178), the flow regulator (166) and the third circuit leg (180) during a second mode of operation.

## Description

### BACKGROUND OF THE DISCLOSURE

### 1. Technical Field

This invention relates generally to an aircraft powerplant and, more particularly, to an air system for the aircraft powerplant.

### 2. Background Information

An aircraft powerplant such as an aircraft propulsion system may include various onboard air systems. Various types and configurations of air systems are known in the art. While these known air systems have various benefits, there is still room in the art for improvement.

### SUMMARY OF THE DISCLOSURE

According to one aspect of the present invention, a system is provided for an aircraft powerplant. This system includes a heat exchanger, a fluid circuit and an air system. The fluid circuit extends through the heat exchanger. The fluid circuit is configured to service one or more components of the aircraft powerplant. The air system includes a first circuit leg, a second circuit leg, a third circuit leg and a flow regulator. The second circuit leg is arranged with the heat exchanger such that the heat exchanger is operable to transfer heat energy between a working fluid flowing in the fluid circuit and air flowing in the second circuit leg. The flow regulator is fluidly coupled between the first circuit leg, the second circuit leg and the third circuit leg. The air system is configured to receive the air from an air source and direct the air sequentially through the first circuit leg, the flow regulator and the second circuit leg during a first mode of operation, wherein the air flows through the second circuit leg in a first direction during the first mode of operation. The air system is configured to receive the air from the air source and direct the air sequentially through the second circuit leg, the flow regulator and the third circuit leg during a second mode of operation, wherein the air flows through the second circuit leg in a second direction during the second mode of operation.

According to another aspect of the present invention, another system is provided for an aircraft powerplant. This system includes an engine core, a bypass flowpath and an air system. The engine core extends axially along an axis. The engine core includes a compressor section, a combustor section and a turbine section. The bypass flowpath bypasses the engine core. The air system is disposed radially outboard of the engine core. The air system includes a first circuit leg, a second circuit leg, a third circuit leg and a flow regulator. The flow regulator is configured to selectively fluidly couple the second circuit leg to the first circuit leg or the third circuit leg. The air system is configured to receive air from the bypass flowpath and direct the air sequentially through the first circuit leg, the flow regulator, the second circuit leg and back into the bypass flowpath during a first mode of operation. The air system is configured to receive the air from the bypass flowpath and direct the air sequentially through the second circuit leg, the flow regulator and the third circuit leg during a second mode of operation.

According to another aspect of the present invention, an aircraft propulsion system is provided that includes a propulsor rotor, an engine core, a housing structure and an air-to-liquid heat exchanger. The engine core is configured to drive rotation of the propulsor rotor about an axis. The engine core includes a compressor section, a combustor section and a turbine section. The housing structure houses the engine core. The housing structure includes an engine case, a flowpath wall, a firewall and a fluid barrier. The engine case houses the compressor section and forms a radial inner peripheral boundary of a bleed passage. The flowpath wall forms a radial inner peripheral boundary of a flowpath that bypasses the engine core. The flowpath wall forms a radial outer peripheral boundary of a heat exchanger compartment. The firewall extends radially between and is connected to the engine case and the flowpath wall. The firewall is axially between and borders the heat exchanger compartment and an internal core compartment of the housing structure. The fluid barrier extends between and is connected to the firewall and the flowpath wall. The fluid barrier forms a radial inner peripheral boundary of the heat exchanger compartment. The fluid barrier forms a radial outer peripheral boundary of the bleed passage. The heat exchanger compartment is fluidly coupled to the flowpath through a first opening in the flowpath wall. The bleed passage is fluidly coupled to the flowpath through a second opening in the flowpath wall. The bleed passage is fluidly coupled to the compressor section through an opening in the engine case. The air-to-liquid heat exchanger is arranged in the heat exchanger compartment.

Optionally, and in accordance with any of the above, the air may flow through the second circuit leg in a first direction during the first mode of operation. The air may flow through the second circuit leg in a second direction during the second mode of operation.

Optionally, and in accordance with any of the above, the system may also include a fluid circuit and a heat exchanger configured to transfer heat energy between a working fluid flowing in the fluid circuit and the air flowing in the second circuit leg during the first mode of operation and the second mode of operation.

Optionally, and in accordance with any of the above, the flow regulator may be configured as or otherwise include a three-way valve.

Optionally, and in accordance with any of the above, during the first mode of operation, the flow regulator may be configured to: fluidly couple the first circuit leg to the second circuit leg; and fluidly decouple the first circuit leg and the second circuit leg from the third circuit leg.

Optionally, and in accordance with any of the above, during the second mode of operation, the flow regulator may be configured to: fluidly couple the second circuit leg to the third circuit leg; and fluidly decouple the second circuit leg and the third circuit leg from the first circuit leg.

Optionally, and in accordance with any of the above, the air system may also include a compressor fluidly coupled inline along the first circuit leg between the air source and the flow regulator.

Optionally, and in accordance with any of the above, the compressor may be configured as or otherwise include an electric compressor.

Optionally, and in accordance with any of the above, the air system may be configured such that: the compressor is operational in the first mode of operation and compresses the air along the first circuit leg; and the compressor is non-operational in the second mode of operation.

Optionally, and in accordance with any of the above, the flow regulator may be a first flow regulator. The air system may also include a second flow regulator fluidly coupled inline along the first circuit leg between the air source and the compressor.

Optionally, and in accordance with any of the above, the air system may also include a valve fluidly coupled inline along the first circuit leg between the flow regulator and the air source.

Optionally, and in accordance with any of the above, the system may also include a compressor section, a combustor section, a turbine section and a flowpath bypassing the compressor section, the combustor section and/or the turbine section. The flowpath may be configured as the air source for the air system.

Optionally, and in accordance with any of the above, the first circuit leg may be fluidly coupled to the flowpath at a first location. The second circuit leg may be fluidly coupled to the flowpath at a second location. The second location may be longitudinally offset from the first location along the flowpath.

Optionally, and in accordance with any of the above, the second location may be upstream of the first location along the flowpath.

Optionally, and in accordance with any of the above, the system may also include an engine case, a flowpath wall and a bulkhead. The engine case may extend axially along and circumferentially about an axis. The engine case may at least partially house the compressor section. The flowpath wall may form a radial inner peripheral boundary of the flowpath. The flowpath wall may form a radial outer peripheral boundary of a heat exchanger compartment. The bulkhead may extend radially from the engine case to the flowpath wall. The bulkhead may form an axial peripheral boundary of the heat exchanger compartment. The heat exchanger may be disposed in the heat exchanger compartment.

Optionally, and in accordance with any of the above, the heat exchanger compartment may form at least a longitudinal section of the second circuit leg.

Optionally, and in accordance with any of the above, the bulkhead may be configured as or otherwise include a firewall.

Optionally, and in accordance with any of the above, the system may also include a fluid barrier extending from the bulkhead to the flowpath wall. The fluid barrier may form a radial inner peripheral boundary of the heat exchanger compartment. The fluid barrier may form a radial outer peripheral boundary of a bleed passage for the compressor section. The engine case may form a radial inner peripheral boundary of the bleed passage.

Optionally, and in accordance with any of the above, the bulkhead may form an axial peripheral boundary of a second compartment. The flow regulator may be arranged in the second compartment.

Optionally, and in accordance with any of the above, the system may also include a housing structure comprising an internal compartment. The flow regulator may be arranged in the internal compartment. The air system may be configured to direct the air into the internal compartment through the third circuit leg during the second mode of operation.

Optionally, and in accordance with any of the above, the air system may also include an electric compressor. The electric compressor may be fluidly coupled inline along the first circuit leg between the air source and the flow regulator. The electric compressor may be arranged in the internal compartment.

Optionally, and in accordance with any of the above, the system may also include an electric machine and a fluid system configured to cool and/or lubricate the electric machine using the working fluid. The fluid system may include the fluid circuit.

Optionally, and in accordance with any of the above, the system may also include an electric machine, an electric machine controller and a fluid circuit. The electric machine controller may be configured to control operation of the electric machine. The fluid system may be configured to service the electric machine and/or the electric machine controller using the working fluid. The fluid system may include the fluid circuit.

Optionally, and in accordance with any of the above, the system may also include a turbine engine and a fluid system configured to cool and/or lubricate one or more components of the turbine engine using the working fluid. The fluid system may include the fluid circuit.

The present invention may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a partial schematic illustration of an aircraft propulsion system.
FIG. 2 is a schematic illustration of a portion of the aircraft propulsion system with an electric machine system.
FIGS. 3A and 3B are schematic illustrations of portions of the aircraft propulsion system with an air system during various modes of operation.
FIG. 4 is a schematic illustration of a portion of the aircraft propulsion system with a multi-volume structure housing a heat exchanger for the air system.
FIG. 5 is a schematic illustration of a portion of the aircraft propulsion system with an electric boost compressor system.

### DETAILED DESCRIPTION

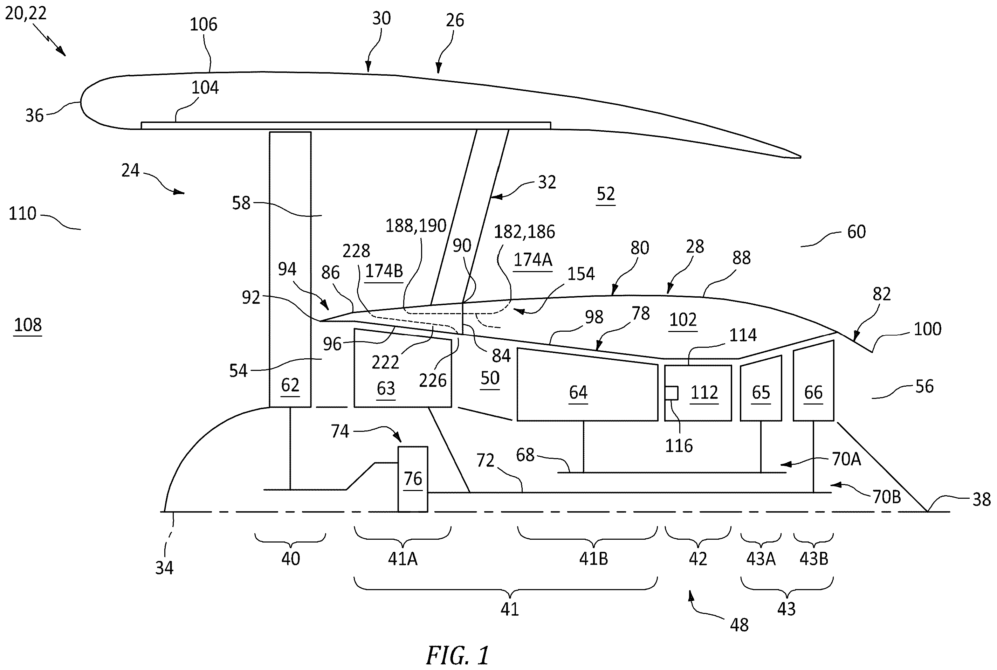

FIG. 1 illustrates a powerplant 20 for an aircraft. The aircraft may be an airplane, a drone (e.g., an unmanned aerial vehicle (UAV)) or any other manned or unmanned aerial vehicle or system. For ease of description, the aircraft powerplant 20 is described below as a propulsion system 22 for the aircraft and, more particularly, as a turbofan propulsion system. The aircraft powerplant 20 of the present disclosure, however, is not limited to such an exemplary propulsion system. The aircraft propulsion system 22, for example, may alternatively be configured as a turbojet propulsion system, a turboprop propulsion system, a turboshaft propulsion system, a propfan propulsion system, a pusher fan propulsion system, or any other type of ducted and/or open propulsor rotor propulsion system. Moreover, the aircraft powerplant 20 is not limited to propulsion system applications. The aircraft powerplant 20, for example, may also (or alternatively) be configured as an electrical power system for the aircraft; e.g., an auxiliary power unit (APU).

The aircraft propulsion system 22 includes a gas turbine engine 24 (e.g., a turbofan engine) housed within a stationary propulsion system housing 26, which propulsion system housing 26 of FIG. 1 includes an inner housing structure 28, an outer housing structure 30 and a guide vane structure 32 (e.g., a fan exit guide vane (FEGV) structure) extending radially between and connected to the inner housing structure 28 and the outer housing structure 30. The aircraft propulsion system 22 extends axially along an axis 34 of the aircraft propulsion system 22 between an axial upstream, forward end 36 of the aircraft propulsion system 22 and an axial downstream, aft end 38 of the aircraft propulsion system 22. Briefly, the propulsion system axis 34 may be a centerline axis of the aircraft propulsion system 22, the turbine engine 24 and/or one or more of its members. The propulsion system axis 34 may also or alternatively be a rotational axis for one or more members of the turbine engine 24.

The aircraft propulsion system 22 and its turbine engine 24 of FIG. 1 include a propulsor section 40 (e.g., a fan section), a compressor section 41, a combustor section 42 and a turbine section 43. The compressor section 41 of FIG. 1 includes a low pressure compressor (LPC) section 41A and a high pressure compressor (HPC) section 41B. The turbine section 43 of FIG. 1 includes a high pressure turbine (HPT) section 43A and a low pressure turbine (LPT) section 43B. At least (or only) the LPC section 41A, the HPC section 41B, the combustor section 42, the HPT section 43A and the LPT section 43B collectively form a core 48 (e.g., a gas generator) of the turbine engine 24. The aircraft propulsion system 22 and its turbine engine 24 of FIG. 1 also include a core flowpath 50 (e.g., an annular core flowpath) and a bypass flowpath 52 (e.g., an annular bypass flowpath). The core flowpath 50 extends sequentially through the LPC section 41A, the HPC section 41B, the combustor section 42, the HPT section 43A and the LPT section 43B from an airflow inlet 54 into the core flowpath 50 to a combustion products exhaust 56 out from the core flowpath 50. The bypass flowpath 52 extends through a bypass duct from an airflow inlet 58 into the bypass flowpath 52 to an airflow exhaust 60 from the bypass flowpath 52, where the bypass duct may be formed by the inner housing structure 28 and the outer housing structure 30. The bypass flowpath 52 and its bypass duct are configured to bypass (e.g., are disposed radially outboard of and extend along) the engine core 48 and the inner housing structure 28.

The propulsor section 40, the LPC section 41A, the HPC section 41B, the combustor section 42, the HPT section 43A and the LPT section 43B may be arranged sequentially along the propulsion system axis 34 within the propulsion system housing 26. The propulsor section 40 includes a bladed propulsor rotor 62; e.g., a fan rotor. The LPC section 41A includes a bladed low pressure compressor (LPC) rotor 63. The HPC section 41B includes a bladed high pressure compressor (HPC) rotor 64. The HPT section 43A includes a bladed high pressure turbine (HPT) rotor 65. The LPT section 43B includes a bladed low pressure turbine (LPT) rotor 66. Each of these engine rotors 62-66 includes a rotor base (e.g., a disk or a hub) and a plurality of rotor blades (e.g., airfoils, vanes, etc.). The rotor blades may be arranged into one or more stages axially along the respective engine rotor 62-66. The rotor blades in each stage are arranged and may be equispaced circumferentially around the respective rotor base in an annular array. Each of the rotor blades is connected to the respective rotor base. The rotor blades, for example, may be formed integral with or mechanically fastened, welded, brazed and/or otherwise attached to the respective rotor base. Each of the rotor blades projects spanwise (e.g., radially) out from the respective rotor base to a distal tip of the respective rotor blade.

The HPC rotor 64 is coupled to and rotatable with the HPT rotor 65. The HPC rotor 64 of FIG. 1, for example, is connected to the HPT rotor 65 through a high speed shaft 68. At least (or only) the HPC rotor 64, the HPT rotor 65 and the high speed shaft 68 collectively form a high speed rotating structure 70A; e.g., a high speed spool of the turbine engine 24 and its engine core 48. This high speed rotating structure 70A of FIG. 1 and its members 64, 65 and 68 are rotatable about the propulsion system axis 34. However, it is contemplated the high speed rotating structure 70A may alternatively be rotatable about another axis radially and/or angularly offset from the rotational axis of the propulsor rotor 62 and/or the centerline axis of the turbine engine 24.

The LPC rotor 63 is coupled to and rotatable with the LPT rotor 66. The LPC rotor 63 of FIG. 1, for example, is connected to the LPT rotor 66 through a low speed shaft 72. At least (or only) the LPC rotor 63, the LPT rotor 66 and the low speed shaft 72 collectively form a low speed rotating structure 70B; e.g., a low speed spool of the turbine engine 24 and its engine core 48. This low speed rotating structure 70B of FIG. 1 and its members 63, 66 and 72 are rotatable about the propulsion system axis 34. However, it is contemplated the low speed rotating structure 70B may alternatively be rotatable about another axis radially and/or angularly offset from the rotational axis of the propulsor rotor 62 and/or the centerline axis of the turbine engine 24.

The low speed rotating structure 70B is coupled to the propulsor rotor 62 through a rotating structure-to-propulsor (RSP) drivetrain 74. The RSP drivetrain 74 may be configured as a geared drivetrain, where a geartrain 76 (e.g., a transmission, a speed change device, an epicyclic geartrain, etc.) is disposed between and operatively couples the propulsor rotor 62 to the low speed rotating structure 70B and its LPT rotor 66. With this arrangement, the propulsor rotor 62 may rotate at a different (e.g., slower) rotational speed than the low speed rotating structure 70B and its LPT rotor 66. Here, the propulsor rotor 62 and the low speed rotating structure 70B may rotate in a common (the same) direction about the propulsion system axis 34 or in opposite directions about the propulsion system axis 34 depending, for example, upon the specific configuration of the geartrain 76. Alternatively, the RSP drivetrain 74 may be configured as a direct-drive drivetrain, where the geartrain 76 is omitted. With such an arrangement, the propulsor rotor 62 rotates at a common (the same) rotational speed as the low speed rotating structure 70B and its LPT rotor 66.

The inner housing structure 28 of FIG. 1 includes an inner case 78 (e.g., a core case), an inner wall structure 80, a core exhaust nozzle structure 82 and a bulkhead 84 (e.g., a firewall). The inner case 78 is disposed radially outboard of, extends axially along and may circumscribe one or more or all of the engine sections 41A-43B and the engine rotors 63-66. The inner case 78 may thereby house and provide a support structure for the respective engine sections 41A-43B and the engine rotors 63-66.

The inner wall structure 80 is configured to provide an aerodynamic cover over the engine core 48 and its inner case 78. This inner wall structure 80 is also configured to form a radial inner peripheral boundary of the bypass flowpath 52. The inner wall structure 80 of FIG. 1, for example, includes an inner flowpath wall 86 (e.g., an outer casing of the inner housing structure 28) and an inner nacelle structure 88 (e.g., an inner fixed structure (IFS)). The inner flowpath wall 86 may form a radial inner platform for the guide vane structure 32. The inner flowpath wall 86 of FIG. 1, for example, projects axially (in an upstream, forward direction) from an axial downstream, aft end 90 of the guide vane structure 32 to or near a leading edge 92 of a splitter structure 94. Here, the inner flowpath wall 86 extends axially along and may circumscribe at least a section 96 of the inner case 78 housing the LPC section 41A and its LPC rotor 63. The leading edge 92 of the splitter structure 94 forms a radial outer peripheral boundary of the core inlet 54 and a radial inner peripheral boundary of the bypass inlet 58. The inner nacelle structure 88 extends axially (in a downstream, aft direction) from the inner flowpath wall 86 to or near the core exhaust nozzle structure 82. Here, the inner nacelle structure 88 extends axially along and circumferentially about at least a section 98 of the inner case 78 housing the engine sections 41A-43B and the engine rotors 63-66. A trailing edge 100 of the core exhaust nozzle structure 82 forms a radial outer peripheral boundary of the core exhaust 56.

The bulkhead 84 projects radially out from the inner case 78 to the inner flowpath wall 86. The bulkhead 84 is also mechanically fastened and/or otherwise attached to the inner case 78 and the inner flowpath wall 86. The bulkhead 84 of FIG. 1, in particular, is attached to the inner flowpath wall 86 at (or about) the aft end 90 of the guide vane structure 32. The bulkhead 84 extends circumferentially about (e.g., completely around) the inner case 78 and the propulsion system axis 34. This bulkhead 84 may be configured as a firewall or other barrier spatially and/or fluidly dividing a forward region of the inner housing structure 28 from an aft region of the inner housing structure 28 and, more particularly, an inner housing compartment 102 (e.g., an engine core compartment) in the aft region of the inner housing structure 28. This inner housing compartment 102 may be formed by and extend radially between the inner case 78 and the inner nacelle structure 88. This inner housing compartment 102 may also extend axially along the inner case 78 and the inner nacelle structure 88 (in the upstream, forward direction) to the bulkhead 84.

The outer housing structure 30 of FIG. 1 includes an outer case 104 (e.g., a fan case) for the turbine engine 24 and an outer nacelle structure 106. The outer case 104 is disposed radially outboard of, extends axially along and may circumscribe the propulsor section 40 and its propulsor rotor 62. The outer case 104 may thereby house and may be configured as a containment structure for the propulsor section 40 and its propulsor rotor 62. The outer nacelle structure 106 is configured to provide an aerodynamic cover over the outer case 104. The outer housing structure 30 and its outer nacelle structure 106 may also form a radial outer peripheral boundary of the bypass flowpath 52.

During turbine engine operation, ambient air from an environment 108 external to the aircraft and its aircraft propulsion system 22 enters the aircraft propulsion system 22 and its turbine engine 24 through an airflow inlet 110. This air is directed across the propulsor section 40 and is propelled by the propulsor rotor 62. The air propelled by the propulsor rotor 62 is subsequently split into a radial inner stream of air and a radial outer stream of air by the splitter structure 94. The inner air stream is directed into the core flowpath 50. This air entering the core flowpath 50 may be referred to as "core air". The outer air stream is directed into the bypass flowpath 52. The air entering the bypass flowpath 52 may be referred to as "bypass air".

The core air is compressed by the LPC rotor 63 and the HPC rotor 64 and is directed into a combustion chamber 112 (e.g., an annular combustion chamber) of a combustor 114 (e.g., an annular combustor) in the combustor section 42. Fuel is injected into the combustion chamber 112 by one or more fuel injectors 116 and mixed with the compressed core air to provide a fuel-air mixture. This fuel-air mixture is ignited and combustion products thereof flow through and sequentially drive rotation of the HPT rotor 65 and the LPT rotor 66. The rotation of the HPT rotor 65 and the LPT rotor 66 respectively drive rotation of the HPC rotor 64 and the LPC rotor 63 and, thus, compression of the air received from the core inlet 54. The rotation of the LPT rotor 66 also drives rotation of the propulsor rotor 62 through the RSP drivetrain 74. The rotation of the propulsor rotor 62 propels the bypass air through and out of the bypass flowpath 52 to provide forward aircraft thrust.

While the turbine engine 24 is described above with a particular two rotating structure arrangement (e.g., a two-spool architecture), the present disclosure is not limited thereto. For example, the LPC rotor 63 may be omitted to configure the LPT rotor 66 as a power turbine (PT) rotor for the propulsor rotor 62. The turbine engine 24 may also or alternatively include another rotating structure with a bladed compressor rotor in the compressor section 41 and a bladed turbine rotor in the turbine section 43; e.g., an intermediate speed spool for the engine core 48.

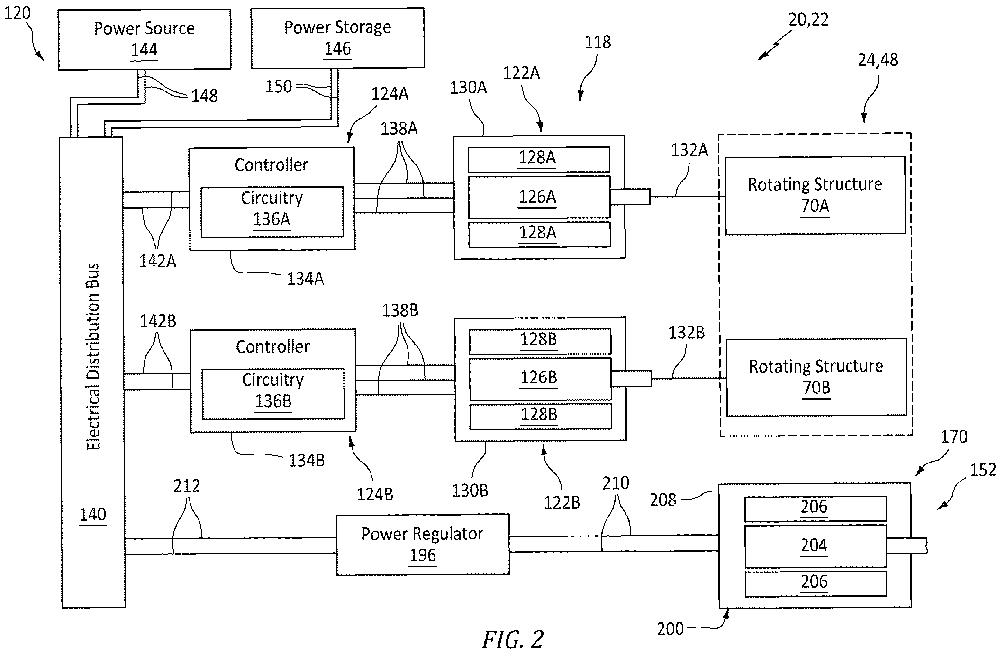

Referring to FIG. 2, the aircraft propulsion system 22 may include an electric machine system 118 electrically coupled to an electrical system 120 for the aircraft and its aircraft propulsion system 22. The electric machine system 118 of FIG. 2 includes one or more electric machines 122A and 122B (generally referred to as "122") and one or more electric machine (EM) controllers 124A and 124B (generally referred to as "124"). For ease of description, each electric machine 122 of FIG. 2 is described below as being electrically coupled to, controlled by and/or otherwise associated with a single, dedicated one of the EM controllers 124. However, it is contemplated a single EM controller may alternatively be electrically coupled to, may control and/or may otherwise be associated with multiple electric machines. It is also contemplated multiple EM controllers may be electrically coupled to, may control and/or may otherwise be associated with one or more common electric machines.

Each electric machine 122A, 122B of FIG. 2 includes an electric machine rotor 126A, 126B (generally referred to as "126"), an electric machine stator 128A, 128B (generally referred to as "128") and an electric machine housing 130A, 130B (generally referred to as "130"); e.g., a case. The machine rotor 126 is rotatable about a rotational axis of the machine rotor 126, which machine axis may also be an axial centerline of the electric machine 122. The machine stator 128 is disposed next to and in electromagnetic communication with the machine rotor 126. The machine stator 128 of FIG. 2, in particular, is radially outboard of and circumscribes the machine rotor 126. With this arrangement, each electric machine 122 is configured as a radial flux electric machine. The electric machines 122 of the present disclosure, however, are not limited to such an exemplary rotor-stator configuration nor to radial flux arrangements. The machine rotor 126, for example, may alternatively be radially outboard of and circumscribe the machine stator 128. In another example, the machine rotor 126 may be axially next to the machine stator 128 configuring the respective electric machine 122 as an axial flux electric machine. Referring again to FIG. 2, the machine rotor 126 and the machine stator 128 are at least partially or completely housed within and interior of the machine housing 130.

The electric machines 122 are operatively coupled to the turbine engine 24 and its engine core 48. More particularly, each electric machine 122A, 122B may be operatively coupled to a respective one of the engine rotating structures 70A, 70B (generally referred to as "70"). Each machine rotor 126A, 126B of FIG. 2, for example, is mechanically coupled to the respective engine rotating structure 70A, 70B through a respective core-to-electric machine (CEM) drivetrain 132A, 132B (generally referred to as "132"); schematically shown. This CEM drivetrain 132 may be configured as or otherwise include a shaft, a tower shaft assembly, an accessory gearbox, another gearbox (e.g., an angle gearbox), and/or the like. For ease of description, each machine rotor 126 of FIG. 2 is described below as being coupled to and rotatable with a unique one of the engine rotating structures 70 of the aircraft propulsion system 22. However, it is contemplated multiple machine rotors may alternatively be coupled to and rotatable with a common engine rotating structure. It is also contemplated a single one of the machine rotors may be coupled to and rotatable with multiple engine rotating structures, directly or through another device such as a differential or a clutch system.

Each electric machine 122 of FIG. 2 may be configurable as an electric motor and/or an electric generator; e.g., an electric motor-generator. For example, during a motor mode of operation, a respective electric machine 122 may operate as the electric motor to convert electricity received from the aircraft electrical system 120. The machine stator 128, for example, may generate an electromagnetic field with the machine rotor 126 using a current of electricity received from the aircraft electrical system 120 through the respective EM controller 124. This electromagnetic field may drive rotation of the machine rotor 126. The machine rotor 126, in turn, may provide mechanical power to and drive rotation of the respective engine rotating structure 70 through the respective CEM drivetrain 132. This mechanical power may be provided to boost power or completely power the rotation of the respective engine rotating structure 70. By contrast, during a generator mode of operation, the electric machine 122 may operate as the electric generator to convert mechanical power received from the respective engine rotating structure 70 into electricity. Rotation of the machine rotor 126, for example, may be rotationally driven by rotation of the respective engine rotating structure 70 through the respective CEM drivetrain 132. The rotation of the machine rotor 126 may generate an electromagnetic field with the machine stator 128, and the machine stator 128 may convert energy from the electromagnetic field into electricity. The respective electric machine 122 may then provide a current of electricity to the aircraft electrical system 120 through the respective EM controller 124 for storage and/or further use. The electric machines 122 of the present disclosure, however, are not limited to such exemplary operation. For example, one, some or all of the electric machines 122 may alternatively each be configured as a dedicated electric generator; e.g., without the electric motor functionality. One, some or all of the electric machines 122 may alternatively each be configured as a dedicated electric motor; e.g., without the electric generator functionality.

Each EM controller 124A, 124B includes a controller housing 134A, 134B (generally referred to as "134") and internal controller circuitry 136A, 136B (generally referred to as "136"). The controller housing 134 may be configured as an enclosed case (e.g., a closed or sealed container) for the respective controller circuitry 136. The controller circuitry 136 is disposed within an interior of the controller housing 134; e.g., an internal chamber or other volume(s) within and enclosed by the controller housing 134. The controller circuitry 136 includes various electrical components, connectors and the like. Examples of the electrical components include, but are not limited to, printed circuit board(s) (PCB(s)), electrical inductor(s), electrical inverter(s), electrical amplifier(s), electrical switch(es) (e.g., contactor(s), relay(s), etc.), a processing device, memory, a communication module, electrical transformer(s), electrical rectifier(s), and/or the like.

Each EM controller 124A, 124B is electrically coupled to a respective one of the electric machines 122A, 122B through one or more electric cables 138A, 138B (generally referred to as "138"); e.g., high voltage electric cables, power feeder cables, etc. More particularly, the controller circuitry 136 of each EM controller 124 is electrically coupled to the respective electric machine 122 and its machine stator 128 through the respective electric cables 138. Similarly, each EM controller 124A, 124B is electrically coupled to an electrical distribution bus 140 of the aircraft electrical system 120 through one or more electric cables 142A, 142B (generally referred to as "142"); e.g., high voltage electric cables, power feeder cables, etc. More particularly, the controller circuitry 136 of each EM controller 124 is electrically coupled to the aircraft electrical system 120 and its electrical distribution bus 140 through the respective electric cables 142.

Each EM controller 124 and its controller circuitry 136 are configured to control operation of a respective one of the electric machines 122. For example, when operating as the electric motor, the respective EM controller 124 and its controller circuitry 136 are configured to regulate a flow of electricity from the aircraft electrical system 120 to the respective electric machine 122. This electricity flow regulation may include: (a) turning-on the flow of electricity from the aircraft electrical system 120 to the respective electric machine 122 (e.g., electrically coupling the respective electric machine 122 to the aircraft electrical system 120); (b) turning-off the flow of electricity from the aircraft electrical system 120 to the respective electric machine 122 (e.g., electrically decoupling the respective electric machine 122 from the aircraft electrical system 120); (c) moderating the flow of electricity from the aircraft electrical system 120 to the respective electric machine 122. Here, the respective EM controller 124 operates as a motor controller. In another example, when operating as the electric generator, the respective EM controller 124 and its controller circuitry 136 are configured to regulate a flow of electricity from the respective electric machine 122 to the aircraft electrical system 120. This electricity flow regulation may include: (a) turning-on the flow of electricity from the respective electric machine 122 to the aircraft electrical system 120 (e.g., electrically coupling the respective electric machine 122 to the aircraft electrical system 120); (b) turning-off the flow of electricity from the respective electric machine 122 to the aircraft electrical system 120 (e.g., electrically decoupling the respective electric machine 122 from the aircraft electrical system 120); (c) moderating the flow of electricity from the respective electric machine 122 to the aircraft electrical system 120. Here, the respective EM controller 124 operates as a generator controller.

The aircraft electrical system 120 includes the electrical distribution bus 140. This aircraft electrical system 120 may also include a power source 144 and/or a power storage 146. The electrical distribution bus 140 is electrically coupled to the electric machines 122 through their respective EM controllers 124. The electrical distribution bus 140 is electrically coupled to the power source 144 and the power storage 146 through one or more respective electric cables 148 and 150; e.g., high voltage electric cables, power feeder cables, etc. The electrical distribution bus 140 of FIG. 2 is also electrically coupled to an electric boost compressor system 152 as described below in further detail. Of course, the electrical distribution bus 140 may also be electrically coupled to one or more additional electric components of the aircraft propulsion system 22 and/or one or more additional electric components of the aircraft outside of the aircraft propulsion system 22; e.g., airframe mounted electric components, etc. With this arrangement, the electrical distribution bus 140 provides an intermediate connection between the various electrical members 122A (via 124A), 122B (via 124B), 144, 146, 152 and/or additional electric components.

The power source 144 may be an electric generator powered by the turbine engine 24 (see FIG. 1) or an electric generator powered by another aircraft powerplant; e.g., an engine of a companion aircraft propulsion system, an engine of an auxiliary power unit (APU), a fuel cell system, etc. The power storage 146 is configured to receive electricity from the electrical distribution bus 140 for storage. The power storage 146 is also configured to provide the stored electricity to the electrical distribution bus 140. The power storage 146, for example, may be configured as or otherwise include one or more electricity storage devices; e.g., batteries, super capacitors, etc. Of course, it is contemplated one or more of the electric machines 122A, 122B (e.g., operating as the electric generator(s)) may also or alternatively operate as a power source for another one or more of the electric machines 122B, 122A (e.g., operating as the electric motor(s)). Moreover, one or more of the electric machines 122 may also or alternatively operate as a power source for the electric boost compressor system 152.

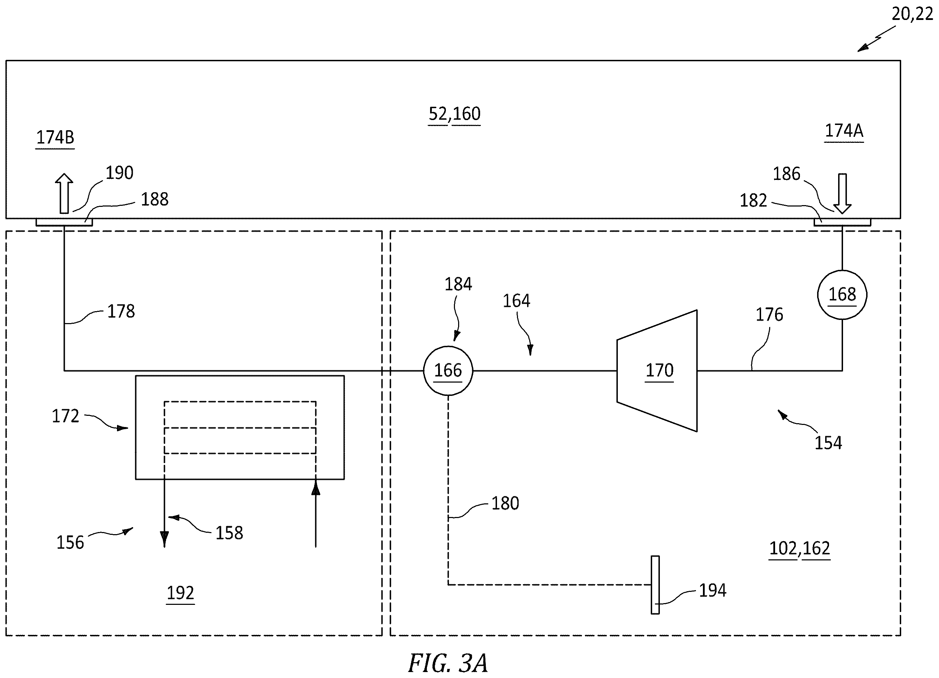

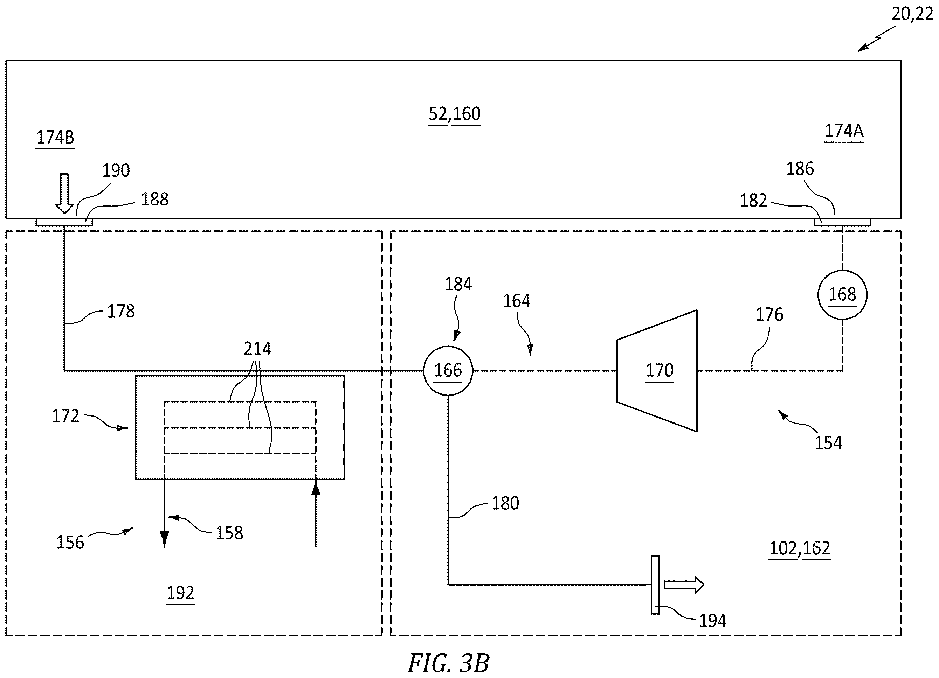

Referring to FIGS. 3A and 3B, the aircraft propulsion system 22 includes an air system 154 in thermal communication with a working fluid system 156. This working fluid system 156 may be configured to service one or more components of the aircraft propulsion system 22 using a working fluid. The working fluid system 156, for example, may be configured as part of a thermal management system (TMS) and/or a lubrication system for the electric machine system 118 (see FIG. 2). More particularly, the working fluid system 156 may be configured to lubricate and/or cool one or more of the electric machine members 122A, 122B, 124A and/or 124B (see FIG. 2) using the working fluid. In another example, the working fluid system 156 may be configured as part of a thermal management system (TMS) and/or a lubrication system for the turbine engine 24 (see FIG. 1). More particularly, the working fluid system 156 may be configured to lubricate and/or cool one or more components of the turbine engine 24 and its engine core 48 (see FIG. 1) using the working fluid. Examples of such components include, but are not limited to, bearing(s) supporting the rotating structure(s) 70A and/or 70B (see FIG. 1), bearing(s) and/or gear(s) of the RSP drivetrain 74 and its geartrain 76 (see FIG. 1), and/or seal assemblies. The working fluid utilized by the working fluid system 156 may be a liquid working fluid such as, but not limited to, lubricant (e.g., engine oil) and/or coolant. The present disclosure, however, is not limited to such exemplary working fluid configurations nor to such exemplary working fluids. For example, it is contemplated the working fluid system 156 may also or alternatively be configured as part of a fuel system where the working fluid is fuel, a hydraulic system where the working fluid is hydraulic fluid, and/or the like.

The air system 154 may be configured to extract heat energy from the working fluid flowing in (e.g., circulated through) a fluid circuit 158 of the working fluid system 156 using a flow of air received from an air source 160. This air system 154 may also be configured to selectively provide the flow of air received from the air source 160 to an air sink 162. For ease of description, the air source 160 and the air sink 162 are described below as (e.g., independent) internal volumes within the aircraft propulsion system 22. More particularly, the air source 160 is described below as the bypass flowpath 52 (see also FIG. 1), and the air sink 162 is described below as the inner housing compartment 102 (see also FIG. 1). The present disclosure, however, is not limited to such exemplary air source and air sink internal volumes. Moreover, it is contemplated the air source 160 may alternatively be a volume external to the aircraft propulsion system 22 such as the external environment 108 (see FIG. 1). It is also contemplated the air sink 162 may alternatively be configured as an air component of the aircraft propulsion system 22 which uses the air during operation thereof; e.g., an air nozzle, an air distribution manifold, a pneumatic actuator and/or the like. Referring again to the arrangement of FIGS. 3A and 3B, the air system 154 includes a reverse flow air circuit 164, one or more flow regulators 166 and 168, a boost compressor 170 and a heat exchanger 172.

Referring to FIG. 3A, during a first mode of operation, the air circuit 164 is configured to fluidly couple a first region 174A of the bypass flowpath 52 (here, the air source 160) to a second region 174B of the bypass flowpath 52. Referring to FIG. 3B, during a second mode of operation, the air circuit 164 is configured to fluidly couple the bypass flowpath 52 and its second region 174B (here, the air source 160) to the inner housing compartment 102. The air circuit 164 of FIGS. 3A and 3B, for example, is configured as a multi-path airflow passage extending between the first region 174A of the bypass flowpath 52, the second region 174B of the bypass flowpath 52 and the inner housing compartment 102. The air circuit 164 of FIGS. 3A and 3B includes a first circuit leg 176, a second circuit leg 178 and a third circuit leg 180.

Referring to FIG. 3A, the first circuit leg 176 extends longitudinally from an airflow inlet 182 into the air circuit 164 and its first circuit leg 176 to an intersection 184 between the first circuit leg 176, the second circuit leg 178 and the third circuit leg 180. More particularly, the first circuit leg 176 extends longitudinally from the circuit inlet 182, sequentially through the first leg flow regulator 168 and the boost compressor 170, to a first coupling of (e.g., an airflow inlet into) the inter-leg flow regulator 166. The circuit inlet 182 fluidly couples the air circuit 164 and its first circuit leg 176 to the bypass flowpath 52 at a first leg location 186. Referring to FIG. 1, this first leg location 186 may be arranged downstream of the guide vane structure 32 along the bypass flowpath 52. The first leg location 186 of FIG. 1, for example, is disposed with an inner barrel of the inner nacelle structure 88 along the inner peripheral boundary of the bypass flowpath 52. Referring again to FIG. 3A, the circuit inlet 182 may be configured as or otherwise include a bleed port (or multiple bleed ports) and/or a scoop (or multiple scoops).

Referring to FIGS. 3A and 3B, the second circuit leg 178 extends longitudinally from an airflow inlet/outlet 188 into / out of the air circuit 164 and its second circuit leg 178 to the circuit leg intersection 184. More particularly, the second circuit leg 178 extends longitudinally from the circuit inlet/outlet 188 to a second coupling of (e.g., an airflow inlet into (see FIG. 3B) / an airflow outlet from (see FIG. 3A)) the inter-leg flow regulator 166. The circuit inlet/outlet 188 fluidly couples the air circuit 164 and its second circuit leg 178 to the bypass flowpath 52 at a second leg location 190. Referring to FIG. 1, this second leg location 190 may be arranged upstream of the guide vane structure 32 along the bypass flowpath 52. The second leg location 190 of FIG. 1, for example, is disposed with the inner flowpath wall 86 along the inner peripheral boundary of the bypass flowpath 52. With this arrangement, the second region 174B of the bypass flowpath 52 and the second leg location 190 are (e.g., axially and/or longitudinally) offset from the first region 174A of the bypass flowpath 52 and the first leg location 186. More particularly, the second region 174B of the bypass flowpath 52 and the second leg location 190 are upstream of the first region 174A of the bypass flowpath 52 and the first leg location 186 along the bypass flowpath 52. Referring again to FIGS. 3A and 3B, the circuit inlet/outlet 188 may be configured as or otherwise include an inlet/outlet port (or multiple inlet/outlet ports) and/or an inlet/outlet device (or multiple inlet/outlet devices) such as a scoop / nozzle.

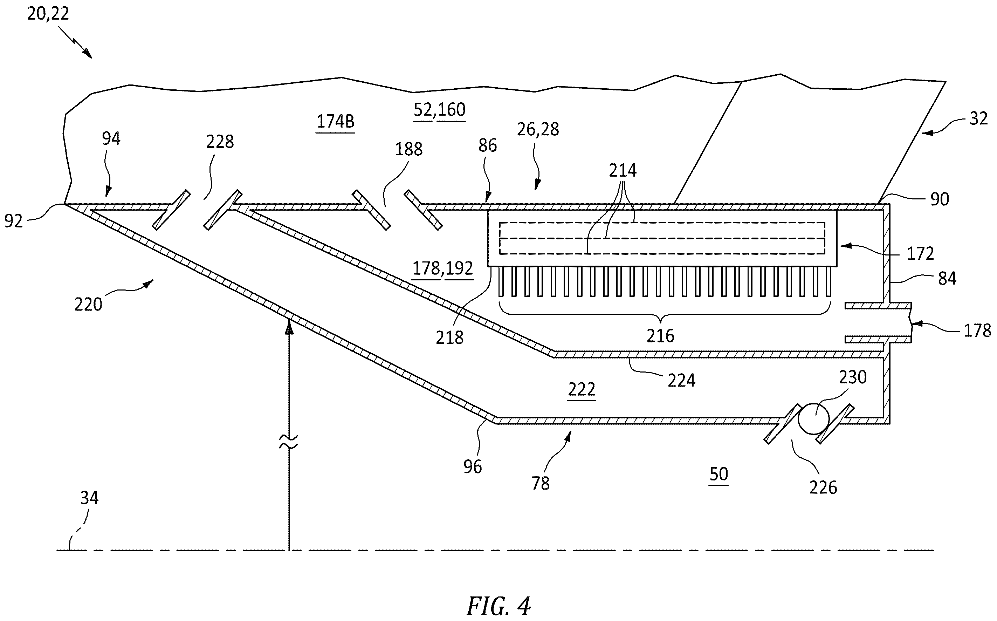

The second circuit leg 178 is also arranged in thermal communication with the heat exchanger 172. For example, referring to FIG. 4, a longitudinal section of the second circuit leg 178 (e.g., next to or proximate the circuit inlet/outlet 188) may be formed by a heat exchanger (HX) compartment 192 in the forward region of the inner housing structure 28. The heat exchanger 172 of FIG. 4 is disposed within this HX compartment 192 such that the air flowing in the second circuit leg 178 and its HX compartment 192 contacts and flows along the heat exchanger 172. The air system 154 of the present disclosure, however, is not limited to such an exemplary arrangement. For example, it is contemplated the second circuit leg 178 may also or alternatively extend through the heat exchanger 172 in other embodiments.

Referring to FIG. 3B, the third circuit leg 180 extends longitudinally from the circuit leg intersection 184 to an airflow outlet 194 from the air circuit 164 and its third circuit leg 180. More particularly, the third circuit leg 180 extends longitudinally from a third coupling of (e.g., an airflow outlet from) the inter-leg flow regulator 166 to the circuit outlet 194. The circuit outlet 194 fluidly couples the air circuit 164 and its third circuit leg 180 to the inner housing compartment 102. The circuit outlet 194 may be configured as or otherwise include an outlet port (or multiple outlet ports) and/or an outlet nozzle (or multiple outlet nozzles).

The inter-leg flow regulator 166 of FIGS. 3A and 3B is fluidly coupled along the air circuit 164 at the circuit leg intersection 184. This inter-leg flow regulator 166 of FIGS. 3A and 3B is configured to selectively fluidly couple the second circuit leg 178 to one of the first circuit leg 176 or the third circuit leg 180. The inter-leg flow regulator 166, for example, may be configured as or otherwise include a flow diverter, a valve (e.g., a three-way valve) or a valve system. During the first operating mode of FIG. 3A, the inter-leg flow regulator 166 fluidly couples the first circuit leg 176 to the second circuit leg 178. The inter-leg flow regulator 166 may also fluidly decouple the first circuit leg 176 and the second circuit leg 178 from the third circuit leg 180. During the second operating mode of FIG. 3B, the inter-leg flow regulator 166 fluidly couples the second circuit leg 178 to the third circuit leg 180. The inter-leg flow regulator 166 may also fluidly decouple the second circuit leg 178 and the third circuit leg 180 from the first circuit leg 176. While the inter-leg flow regulator 166 of FIGS. 3A and 3B is generally described above as selectively fluidly coupling the circuit legs 176, 178 and 180 together, it is contemplated the inter-leg flow regulator 166 may (or may not) also increase, decrease and/or otherwise meter the flow of air through the inter-leg flow regulator 166 between the respective fluidly coupled circuit legs 176 and 178 (see FIG. 3A), 178 and 180 (see FIG. 3B).

Referring to FIG. 3A, the first leg flow regulator 168 is fluidly coupled inline along the first circuit leg 176 between the circuit inlet 182 and the boost compressor 170. This first leg flow regulator 168 is also longitudinally spaced downstream of the circuit inlet 182 along the first circuit leg 176. The air system 154 of the present disclosure, however, is not limited to such an exemplary arrangement. The first leg flow regulator 168, for example, may alternatively be disposed adjacent or may form the circuit inlet 182.

The first leg flow regulator 168 is configured to regulate the flow of air directed through the air circuit 164 and its first circuit leg 176 from the circuit inlet 182 to the boost compressor 170 and the downstream inter-leg flow regulator 166. The first leg flow regulator 168, for example, may be configured as or otherwise include a flow diverter, a valve or a valve system. With the first leg flow regulator 168 open, the first leg flow regulator 168 may fluidly couple (a) a section of the first circuit leg 176 which is upstream of the first leg flow regulator 168 to (b) a section of the first circuit leg 176 which downstream of the first leg flow regulator 168. With the first leg flow regulator 168 closed, the first leg flow regulator 168 may fluidly decouple (a) the upstream section of the first circuit leg 176 from (b) the downstream section of the first circuit leg 176 (or facilitate a minimum flow of the air from the upstream section to the downstream section). Of course, it is also contemplated the first leg flow regulator 168 may partially open (or partially close) to increase, decrease and/or otherwise meter the flow of the air from (a) the upstream section of the first circuit leg 176 to (b) the downstream section of the first circuit leg 176.

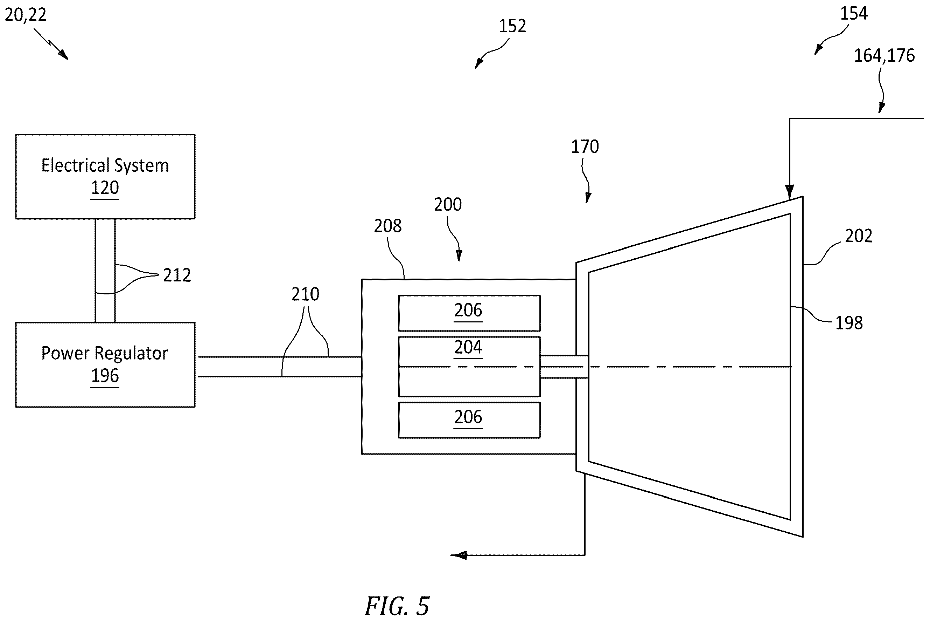

Referring to FIG. 5, the boost compressor 170 is included as part of the electric boost compressor system 152. This electric boost compressor system 152 also includes an electrical power regulator 196. Briefly, the power regulator 196 is electrically coupled between the boost compressor 170 and the aircraft electrical system 120. This power regulator 196 is also configured to control operation of the boost compressor 170.

The boost compressor 170 is configured to boost (e.g., increase) a pressure and/or a flow rate of the air flowing through the air circuit 164 and its first circuit leg 176 and provided to the downstream second circuit leg 178 and the heat exchanger 172. The boost compressor 170 of FIG. 5, for example, includes a compressor rotor 198 and an electric motor 200.

The compressor rotor 198 is disposed within a compressor housing 202. The compressor rotor 198 includes a compressor base (e.g., a disk or a hub) and a plurality of compressor blades (e.g., airfoils, vanes, etc.). The compressor blades are arranged circumferentially around the compressor base in one or more annular arrays. Each of the compressor blades is connected to the compressor base. Each of the compressor blades projects spanwise (e.g., radially) out from the compressor base, into a flowpath of the air circuit 164 and its first circuit leg 176 within the compressor housing 202, to a distal tip of the respective compressor blade.

The electric motor 200 includes an electric motor rotor 204, an electric motor stator 206 and an electric motor housing 208; e.g., a case. The motor rotor 204 is rotatable about a rotational axis of the boost compressor 170 and its members 198 and 202. The motor rotor 204 is operatively coupled to the compressor rotor 198 through a motor-to-compressor (MC) drivetrain; e.g., a driveshaft or a splined coupling. The motor stator 206 of FIG. 5 is radially outboard of and circumscribes the motor rotor 204. With this arrangement, the electric motor 200 is configured as a radial flux electric motor. The electric motor 200 of the present disclosure, however, is not limited to such an exemplary rotor-stator configuration nor to radial flux arrangements. The motor rotor 204, for example, may alternatively be radially outboard of and circumscribe the motor stator 206. In another example, the motor rotor 204 may be axially next to the motor stator 206 configuring the electric motor 200 as an axial flux electric motor. Referring again to FIG. 5, the motor rotor 204 and the motor stator 206 are at least partially or completely housed within an interior of the motor housing 208.

The power regulator 196 is electrically coupled to the electric motor 200 through one or more electric cables 210; e.g., high voltage electric cables, power feeder cables, etc. The power regulator 196 is further electrically coupled to the electrical distribution bus 140 (see FIG. 2) of the aircraft electrical system 120 through one or more electric cables 212; e.g., high voltage electric cables, power feeder cables, etc. The power regulator 196 is thereby electrically coupled between the aircraft electrical system 120 and the electric motor 200. This power regulator 196 may be configured as or otherwise include a switch (e.g., a contactor), a current regulating device and/or a motor control unit operable to selectively direct and/or regulate an electrical current from the aircraft electrical system 120 to the electric motor 200. The power regulator 196 may thereby be utilized to regulate operation (e.g., turn-on, turn-off, maintain speed, speed up, slow down, etc.) of the electric motor 200.

During boost compressor operation, the electric motor 200 converts electricity received from the aircraft electrical system 120 into mechanical power. The motor stator 206, for example, may generate an electromagnetic field with the motor rotor 204 using a current of electricity received from the aircraft electrical system 120 through the power regulator 196. This electromagnetic field may drive rotation of the motor rotor 204. The motor rotor 204, in turn, may provide mechanical power to and drive rotation of the compressor rotor 198. This rotation of the compressor rotor 198 compresses the air within the air circuit 164 and its first circuit leg 176. Using the electric motor 200 to drive the rotation of the compressor rotor 198 divorces operation of the boost compressor 170 from other mechanical and/or fluid systems of the aircraft propulsion system 22. Moreover, using the electric motor 200 to drive the rotation of the compressor rotor 198 facilitates selectively turning on (e.g., energizing) and turning off (e.g., deenergizing) the boost compressor 170 as needed as described below in further detail.

The heat exchanger 172 of FIGS. 3A and 3B includes a plurality of internal heat exchange passages 214. These heat exchange passages 214 are part of and are thereby fluidly coupled inline with the fluid circuit 158. The heat exchanger 172 of FIG. 4 may also include one or more heat exchange members 216. Each heat exchange member 216 may be configured as or otherwise include a cooling fin, a cooling pedestal or another cooling augmentation feature. Each heat exchange member 216 may be formed integral with or otherwise connected to a base 218 of the heat exchanger 172 within which the heat exchange passages 214 extend. Each heat exchange member 216 projects out from the heat exchanger base 218 partially into the HX compartment 192.

The air system 154 of FIGS. 3A and 3B may operate in various modes of operation including, but not limited to, the first operating mode and the second operating mode. During the first operating mode of FIG. 3A, the first leg flow regulator 168 partially or completely opens such that a portion of the relatively cool bypass air within the bypass flowpath 52 may enter the air circuit 164 and its first circuit leg 176 through the circuit inlet 182. This air is compressed by the boost compressor 170 and directed through the inter-leg flow regulator 166 into the second circuit leg 178 and its HX compartment 192 in a first direction. Referring to FIG. 4, within the HX compartment 192, the air pressurized by the boost compressor 170 (see FIG. 3A) flows along the heat exchanger base 218 and its heat exchange members 216. Simultaneously, the working fluid system 156 and its fluid circuit 158 (see FIG. 3A) may direct relatively hot working fluid into the heat exchange passages 214. The heat exchanger 172 may transfer heat energy from the working fluid flowing in the heat exchange passages 214 into the air flowing in the HX compartment 192. This transfer of the heat energy from the working fluid to the air cools the working fluid and heats the air. The cooled working fluid may subsequently be used by the working fluid system 156 (see FIG. 3A) for continued service. The heated air, by contrast, may be directed out of the second circuit leg 178 and its HX compartment 192 through the circuit inlet/outlet 188 to exhaust that heated air into the bypass flowpath 52 for discharging from the aircraft propulsion system 22. This first operating mode may be utilized when the turbine engine 24 (see FIG. 1) is turned off; e.g., prior to or after turbine engine operation. The first operating mode may also or alternatively be utilized while the turbine engine 24 is operating at a relatively low power setting and, for example, the bypass air propelled by the propulsor rotor 62 (see FIG. 1) has a relatively low pressure in the bypass flowpath 52. Such a low power setting may occur, for example, while the aircraft is on ground with the turbine engine 24 (see FIG. 1) at idle.

During the second operating mode of FIG. 3B, the first leg flow regulator 168 may be closed such that relatively little or no air enters the air circuit 164 and its first circuit leg 176 from the bypass flowpath 52 through the circuit inlet 182. Rather, the air entering the air circuit 164 from the bypass flowpath 52 is directed into the second circuit leg 178 and its HX compartment 192 through the circuit inlet/outlet 188 in a second direction, which second direction is opposite the first direction of FIG. 3A. Referring to FIG. 4, within the HX compartment 192, the air flows along the heat exchanger base 218 and its heat exchange members 216. Simultaneously, the working fluid system 156 and its fluid circuit 158 (see FIG. 3B) may direct the relatively hot working fluid into the heat exchange passages 214. The heat exchanger 172 may transfer heat energy from the working fluid flowing in the heat exchange passages 214 into the air flowing in the HX compartment 192. As described above, this transfer of the heat energy from the working fluid to the air cools the working fluid and heats the air. The cooled working fluid may subsequently be used by the working fluid system 156 (see FIG. 3B) for continued service. By contrast, referring to FIG. 3B, the heated air may be directed out of the second circuit leg 178 and into the third circuit leg 180 by the inter-leg flow regulator 166. This heated air may then be directed out of the air circuit 164 and its third circuit leg 180 through the circuit outlet 194 and into the inner housing compartment 102 to ventilate that inner housing compartment 102. This second operating mode may be utilized when the turbine engine 24 (see FIG. 1) is operating at a higher power setting and, for example, the bypass air propelled by the propulsor rotor 62 (see FIG. 1) has a relatively high pressure in the bypass flowpath 52. Such a higher power setting may occur while the aircraft is taking off, inflight (e.g., climbing, at cruise and/or descending) and/or landing.

During the second operating mode, little or no air flows through the first circuit leg 176. The boost compressor 170 may thereby be turned off (e.g., de-powered) during the second operating mode so as to conserve power and reduce parasitic propulsion system losses.

In some embodiments, referring to FIG. 4, the inner housing structure 28 may include a multi-volume structure 220 forming the HX compartment 192. This multi-volume structure 220 may also form a bleed passage 222; e.g., a compressor bleed passage. The multi-volume structure 220 of FIG. 4, for example, includes the section 96 of the inner case 78, the inner flowpath wall 86, the bulkhead 84 and a fluid barrier 224 (e.g., a baffle, a bifurcation, a divider wall, etc.). The fluid barrier 224 of FIG. 4 extends between and is connected to the bulkhead 84 and the inner flowpath wall 86 so as to fluidly divide an interior of the multi-volume structure 220 into the HX compartment 192 and the bleed passage 222. Here, the fluid barrier 224 is spaced (e.g., substantially uniformly) from and may generally follow a contour of the section 96 of the inner case 78. An airflow inlet 226 into the bleed passage 222 of FIG. 4 pierces the inner case 78 and fluidly couples the bleed passage 222 to the core flowpath 50. This passage inlet 226 may be disposed at a location along the core flowpath 50, for example between the LPC rotor 63 and the HPC rotor 64 (see FIG. 1). An airflow outlet 228 from the bleed passage 222 of FIG. 4 pierces the inner flowpath wall 86 and fluidly couples the bleed passage 222 to the bypass flowpath 52. This passage outlet 228 may be disposed at a location along the bypass flowpath 52, for example between the leading edge 92 of the splitter structure 94 and the circuit inlet/outlet 188 and/or the guide vane structure 32 (see FIG. 1).

With the arrangement of FIG. 4, the inner flowpath wall 86 forms a radial outer peripheral boundary of the HX compartment 192. The fluid barrier 224 forms a radial inner peripheral boundary as well as an axial forward boundary of the HX compartment 192. The bulkhead 84 forms an axial aft boundary of the HX compartment 192. The bulkhead 84 also forms an axial aft boundary of the bleed passage 222. The fluid barrier 224 forms a radial outer peripheral boundary of the bleed passage 222. The section 96 of the inner case 78 forms a radial inner peripheral boundary as well as an axial forward boundary of the bleed passage 222. The present disclosure, of course, is not limited to such an exemplary multi-volume structure 220.

The bleed passage 222 may be configured with a passage flow regulator 230 at (e.g., on, adjacent or proximate) the passage inlet 226. This passage flow regulator 230 is configured to regulate the flow of core air bled from the core flowpath 50 through the passage inlet 226 and directed through the bleed passage 222. The passage flow regulator 230, for example, may be configured as or otherwise include a flow diverter, a valve or a valve system. With the passage flow regulator 230 open, the passage flow regulator 230 may fluidly couple the passage inlet 226 to a section of the bleed passage 222 which is downstream of the passage flow regulator 230. With the passage flow regulator 230 closed, the passage flow regulator 230 may fluidly decouple the passage inlet 226 from the section of the bleed passage 222 which is downstream of the passage flow regulator 230 (or facilitate a minimum flow of the air into the bleed passage 222). Of course, it is also contemplated the passage flow regulator 230 may partially open (or partially close) to increase, decrease and/or otherwise meter the flow of the core air bled from the core flowpath 50 into the bleed passage 222.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. A system (22) for an aircraft powerplant (20), the system comprising:
a heat exchanger (172);
a fluid circuit (158) extending through the heat exchanger (172), the fluid circuit (158) configured to service one or more components of the aircraft powerplant (20); and
an air system (154) including a first circuit leg (176), a second circuit leg (178), a third circuit leg (180) and a flow regulator (166), the second circuit leg (178) arranged with the heat exchanger (172) such that the heat exchanger (172) is operable to transfer heat energy between a working fluid flowing in the fluid circuit (158) and air flowing in the second circuit leg (278), and the flow regulator (166) fluidly coupled between the first circuit leg (176), the second circuit leg (178) and the third circuit leg (180),
the air system (154) configured to receive the air from an air source (160) and direct the air sequentially:
through the first circuit leg (176), the flow regulator (166) and the second circuit leg (178) during a first mode of operation, wherein the air flows through the second circuit leg (178) in a first direction during the first mode of operation; and
through the second circuit leg (178), the flow regulator (166) and the third circuit leg (180) during a second mode of operation, wherein the air flows through the second circuit leg (178) in a second direction during the second mode of operation.

2. The system (22) of claim 1, wherein the flow regulator (166) comprises a three-way valve.

3. The system (22) of claim 1 or 2, wherein, during the first mode of operation, the flow regulator (166) is configured to:
fluidly couple the first circuit leg (176) to the second circuit leg (178); and
fluidly decouple the first circuit leg (176) and the second circuit leg (178) from the third circuit leg (180).

4. The system (22) of any preceding claim, wherein, during the second mode of operation, the flow regulator (166) is configured to:
fluidly couple the second circuit leg (178) to the third circuit leg (180); and
fluidly decouple the second circuit leg (178) and the third circuit leg (180) from the first circuit leg (176).

5. The system (22) of any preceding claim, wherein the air system (154) further includes a compressor (170) fluidly coupled inline along the first circuit leg (176) between the air source (160) and the flow regulator (166),
optionally, wherein the compressor (170) comprises an electric compressor.

6. The system (22) of claim 5, wherein the air system (154) is configured such that:
the compressor (170) is operational in the first mode of operation and compresses the air along the first circuit leg (176); and
the compressor (170) is non-operational in the second mode of operation.

7. The system (22) of claim 5 or 6, wherein the flow regulator (166) is a first flow regulator (166), and the air system (154) further includes a second flow regulator (168) fluidly coupled inline along the first circuit leg (176) between the air source (160) and the compressor (170).

8. The system (22) of any preceding claim, wherein the air system (154) further includes a valve fluidly coupled inline along the first circuit leg (176) between the flow regulator (166) and the air source (160).

9. The system (22) of any preceding claim, further comprising:
a compressor section (41);
a combustor section (42);
a turbine section (43); and
a flowpath (52) bypassing the compressor section (41), the combustor section (42) and the turbine section (43), the flowpath (52) configured as the air source (160) for the air system (154).

10. The system of claim 9, wherein:
the first circuit leg (176) is fluidly coupled to the flowpath (52) at a first location (186);
the second circuit leg (178) is fluidly coupled to the flowpath (52) at a second location (190); and
the second location (190) is longitudinally offset from the first location (186) along the flowpath (52).

11. The system (22) of claim 10 or 11, further comprising:
an engine case (78) extending axially along and circumferentially about an axis (34), the engine case (78) at least partially housing the compressor section (41);
a flowpath wall (86) forming a radial inner peripheral boundary of the flowpath (52), and the flowpath wall (86) forming a radial outer peripheral boundary of a heat exchanger compartment (192); and
a bulkhead (84) extending radially from the engine case (78) to the flowpath wall (86), the bulkhead (84) forming an axial peripheral boundary of the heat exchanger compartment (192), the heat exchanger (172) disposed in the heat exchanger compartment (192),
optionally, further comprising:
a fluid barrier (224) extending from the bulkhead (84) to the flowpath wall (86), the fluid barrier (224) forming a radial inner peripheral boundary of the heat exchanger compartment (192), and the fluid barrier (224) forming a radial outer peripheral boundary of a bleed passage (222) for the compressor section (41), and the engine case (78) forming a radial inner peripheral boundary of the bleed passage (222).

12. The system (22) of claim 11, wherein the bulkhead (84) forms an axial peripheral boundary of a second compartment (102), and the flow regulator (166) is arranged in the second compartment (102).

13. The system (22) of any preceding claim, further comprising:
a housing structure (28) comprising an internal compartment (102);
the flow regulator (166) arranged in the internal compartment (102); and
the air system (154) configured to direct the air into the internal compartment (102) through the third circuit leg (180) during the second mode of operation.

14. The system (22) of any preceding claim, further comprising an electric machine (118) and:
a fluid system (156) configured to cool and/or lubricate the electric machine (118) using the working fluid, the fluid system (156) comprising the fluid circuit (158); and/or
an electric machine controller (124) configured to control operation of the electric machine (118) and a fluid system (156) configured to service at least one of the electric machine (118) or the electric machine controller (124) using the working fluid, the fluid system (156) comprising the fluid circuit (158).

15. The system of any preceding claim, further comprising:
a turbine engine (24); and
a fluid system (156) configured to cool and/or lubricate one or more components of the turbine engine (24) using the working fluid, the fluid system (156) comprising the fluid circuit (158).
